# EUROPÄISCHE PATENTANMELDUNG

(11) **EP 1 000 729 A1**
(43) Veröffentlichungstag der Anmeldung: **17.05.2000**
(21) Anmeldenummer: 99122134.2
(22) Anmeldetag: 05.11.1999
(51) Int. Cl.: B29C 45/17, F16L 11/112, F16L 11/11

(54) **Verfahren zur Herstellung von medienführenden Leitungen unter Einsatz des Gasinnendruckverfahrens und damit hergestellte Leitungen**

(30) Priorität: 10.11.1998 DE 19851665
(71) Anmelder: Stieler, Ulrich, 38642 Goslar (DE)
(72) Erfinder: Stieler, Ulrich, 38642 Goslar (DE)
(74) Vertreter: Einsel, Martin, Dipl.-Phys.

(57) **Zusammenfassung**

Ein Verfahren zur Herstellung von medienführend Leitungen arbeitet unter Einsatz des Gasinnendruckverfahrens. Dabei erfolgt eine Anspritzung mit der kunststoffschmelze in die Form für die Leitung. Diese Anspritzung erfolgt in radialer Richtung. Dadurch wird eine Verstärkung der Kunststoffschmelze mit Glasfasern auch im übrigen von mehr als 20% möglich.

## Beschreibung

Die Erfindung betrifft ein Verfahren zur Herstellung von medienführenden Leitungen unter Einsatz des Gasinnendruckverfahrens, bei dem eine Anspritzung mit der Kunststoffschmelze in die Form für die Leitung von einem Angußpunkt benachbart zum Ende der Leitung aus erfolgt, sowie eine aus Kunststoff bestehende und mit dem Gasinnendruckverfahren hergestellte medienführende Leitung.

Medienführende Leitungen sind beispielsweise Wasserleitungen, Benzinleitungen oder auch Gasleitungen, die einerseits im Haushalt, andererseits aber auch in der Kraftfahrzeugtechnik oder industriell vielfältig eingesetzt werden. Herkömmlich handelt es sich um metallische Leitungen, beispielsweise Kupferrohre, aber auch um Schläuche aus Gummi. In jüngster Zeit sind auch medienführende Leitungen aus Kunststoff zunehmend interessant geworden. Dabei ist auch schon vorgeschlagen worden, zu ihrer Herstellung das Gasinnendruckverfahren einzusetzen.

Das Gasinnendruckverfahren arbeitet damit, dass in eine entsprechende Hohlform eine flüssige Kunststoffmasse an einer Zufuhrdüse eingegeben wird. Die Kunststoffschmelze ist zunächst noch flüssig und kühlt ab, wenn sie sich in dem Kunststoffhohlraum an die Wand legt. Es wird zunächst derartige Kunststoffschmelze in erheblicher Menge eingefüllt, die allerdings nicht den gesamten zu bildenden Hohlraum füllt, sondern sich in Form einer Art Front durch den Hohlraum bewegt. Sie wird letztlich von hinten durch Gas getrieben. Da die Kunststoffschmelze an der Außenwand aufgrund der dort niedrigen Temperaturen zuerst fest wird, führt der Gasinnendruck dazu, dass die jeweils noch flüssigen Anteile der Kunststoffschmelze immer weiter durch den Hohlraum getrieben werden und auch den Rest füllen. Lediglich der Innenbereich wird schließlich vom Gas eingenommen, bleibt also frei von Kunststoff.

Dieses Verhalten lässt sich natürlich gerade für medienführende Leitungen besonders optimal einsetzen, da dieser zum Schluss freibleibende innere Hohlraum gerade für das Durchfließen der durchströmenden Medien im fertigen Zustand genutzt werden kann.

Als problematisch erweist es sich allerdings noch, derartige medienführende Leitungen mit einer Glasfaserverstärkung zu versehen. Dies wird häufig gewünscht, da die durch die Leitungen strömenden Medien Überdruck aufweisen, denen die lediglich aus Kunststoff bestehenden Leitungen normalerweise nicht Stand halten würden. Mischt man der Kunststoffschmelze einfach einen bestimmten Anteil an Glasfaser bei, so legen sich die Glasfasern stets in Strömungsrichtung, das ist bei einem üblichen Hohlraum für eine solche Leitung genau achsparallel. Dadurch entsteht bei Überdruck der sogenannte "BockwurstEffekt", das bedeutet, die medienführende Leitung platzt einfach axial auf.

Von W. Michaeli und A. Brunswick, "Herstellung medienführender Leitungen durch GIT", in "Kunststoff 88" (1998), Heft 1, Seiten 34 bis 39, wird überlegt, ob man nicht zumindest bei in Bauteilen integrierten Medienleitungen diesem Problem entgegenwirken kann, indem die Lage des Schmelzeangusses für eine erste Zufuhr von Kunststoffschmelze so verlegt wird, dass die dickwandigeren Leitungsbereiche seitlich von einer Schmelze durchströmt werden, um dort die Fasern in der Randschicht in Umfangsrichtung zu orientieren. Eine Verlegung des Schmelzeangusspunktes ist aber im Regelfall und bei normalen medienführenden Leitungen gar nicht möglich und, sofern möglich, sehr kostenungünstig, da jetzt nacheinander mehrere Verfahrensschritte mit verschiedenen Durchströmungen erforderlich werden, die darüber hinaus auch noch genau aufeinander abgestimmt werden müssen.

Um die kritischen Glasfaseranteile überhaupt transportieren zu können, muss man die Viskosität der Kunststoffschmelze im Übrigen senken, die Schmelze wird also flüssiger. Das führt aber dazu, dass auch die Wandstärken geringer werden, da die strömende Kunststoffschmelze weniger leicht fest wird und schon "weitergeströmt" ist, wenn die Erstarrung eintritt. Dies ist ein gerade unbeabsichtigter und unerwünschter Effekt. Schließlich neigen die Glasfaseranteile dazu, sich an bestimmten Stellen in Bündeln zu konzentrieren, dies noch dazu in kaum reproduzierbarer Form, was ebenfalls die Menge an Glasfasergehalt auf etwa 15 % maximal begrenzt und auch sonst unerwünscht ist.

Aufgabe der vorliegenden Erfindung ist es demgegenüber, ein Verfahren zur Herstellung medienführender Leitungen unter Einsatz des Gasinnendruckverfahrens vorzuschlagen, bei dem auch eine Glasfaserverstärkung effektiv vorgenommen werden kann. Ferner soll auch eine entsprechend verbesserte Leitung geschaffen werden.

Diese Aufgabe wird bei einem gattungsgemäßen Verfahren dadurch gelöst, dass der Kunststoffschmelze eine Bewegungskomponente in nicht achsparallel zur Leitung verlaufender Richtung erteilt wird.

Besonders bevorzugt ist es, wenn der Kunststoffschmelze eine Bewegungskomponente in radialer bzw. Umfangsrichtung der Leitung erteilt wird. In einer ersten alternativen bevorzugten Ausführungsform strömt nun die Kunststoffschmelze nicht mehr in der Axialrichtung des späteren Rohres bzw. der herzustellenden Leitung ein, sondern in Umfangsrichtung. Es bildet sich sofort eine Art Schraubenform aus, das heißt die Kunststoffschmelze strömt mit ihrer Front mit einer leichten Axialkomponente, aber stets radial um die Form der späteren Leitung herum.

Natürlich ist dadurch die insgesamt zurückzulegende Strecke für jeden einzelnen Kunststoffschmelzenpartikel wesentlich erhöht, was aber bei entsprechender Druckaufwendung nicht zu Problemen führt, im Gegenteil. Der höhere Gegendruck führt sogar noch dazu, dass sich die Kunststoffschmelze besonders eng an die Außenhaut der Form anlegt. Die Bereiche in der Mitte der Form, die später also den Hohlraum für die medienführende Leitung bilden, sind unkritisch. Hier ist zwar der Dralleffekt relativ gering, andererseits bleibt die Schmelze gerade hier am längsten flüssig und wird tendentiell nicht an dieser Stelle starr.

Diese Teile der Kunststoffschmelze werden ohnehin durch den Gasinnendruck innerhalb der Form weitertransportiert und erst an anderer Stelle fest.

Der entstehende hauptsächliche Effekt ist jedoch der, dass die gemeinsam mit der Kunststoffschmelze eingebrachten Glasfaserpartikel sich radial innerhalb der länglichen Leitungsform bewegen, nämlich mit der Schmelze. Der frühere gefürchtete Bockwursteffekt kann nicht mehr auftreten: Bei der fertigen Leitung sind die einzelnen Glasfasern jeweils kreisringähnlich ausgerichtet und auf diese Weise sehr viel besser geeignet, einen Überdruck des strömenden Mediums abzufangen.

Neben der radialen Anspritzungsrichtung kann der Dralleffekt noch zusätzlich unterstützt oder auch alternativ dadurch hervorgerufen werden, dass der Kunststoffschmelze mittels einer Prallplatte ein Drall oder eine Umlenkung erteilt wird.

Noch eine weitere Möglichkeit besteht darin, dass die Außenhaut der Form mit einer entsprechenden Schraubenform versehen wird. Dies stabilisiert natürlich die Einspritzrichtung und die radiale Fortpflanzung der Kunststoffschmelze und damit auch die entsprechende gewünschte Anordnung der Glasfasern.

Natürlich wird die Außenform des fertigen Leitungsteils dann ebenfalls mit einer solchen Schraubenanordnung versehen. Dies ist bei der Mehrzahl der Leitungen aber unkritisch, da der leicht vergrößerte Außendurchmesser keine Rolle spielt, ja vielleicht sogar als elastische Abstützung gewünscht ist. Die Schraubenform kann auch etwa komplizierteren Leitungsgebilden angepasst werden. So kann beispielsweise einem Verzugseffekt durch Krümmungen entgegengewirkt werden. Beim Gasinnendruckverfahren entsteht gelegentlich der Effekt, dass außen auf einer Krümmung der Leitung viel Material vorhanden ist, während auf der Gegenseite, nämlich der Innenseite der Krümmung, wenig Material vorhanden ist. Dieser Materialüberschuss zieht sich bei zunehmender Abkühlung stärker zusammen. Das gesamte Bauteil wird aus der ursprünglich mit der Form angestrebten Facon verbogen. Durch die Schraubenform kann gewünschtes Material nun "nebenbei" an die gewünschte Stelle geschafft werden.

Die gewünschten Effekte können auch dann entstehen bzw. genutzt werden, wenn es sich um kompliziertere Herstellungsverfahren und Varianten des Gasinnendruckverfahrens handelt, beispielsweise um ein Gegentaktspritzgießverfahren, was zunehmend auch im Gasinnendruckverfahren interessant ist. Dabei werden die Kunststoffschmelzen zunächst von der einen Seite aus durch die Hohlform für die medienführende Leitung gedrückt, bis sie auf der anderen Seite schon oder schon fast wieder austreten, bis der Druck dann von dort aus ausgeübt wird und die noch flüssigen Partikel als weitere Schicht sich nochmals von innen über die schon teilweise erstarrten Schichten legen.

Es ist auch möglich, das erfindungsgemäße Verfahren mit zwei oder drei Komponenten nacheinander auszuführen, so dass sich die Schichten dann nach innen übereinander legen. Gleichwohl kann die Glasfaserverstärkung effektiver als im Stand der Technik eingesetzt werden.

Bei einer medienführenden, aus Kunststoff bestehenden und mit dem Gasinnendruckverfahren hergestellten Leitung besteht die Lösung der Aufgabe darin, dass die Leitung außen auf der Leitungsaußenseite von schraubenartigen Erweiterungen umgeben ist.

Mit diesen schraubenartigen Erweiterungen lassen sich, wie schon ausgeführt, die radial umlaufenden Ströme verstärken und/oder stabilisieren. Außerdem kann das Bauteil dadurch gegen Verziehen zusätzlich geschützt werden.

Partiell kann die schraubenförmige Geometrie zur Schaffung beispielsweise von Dichtungs- und/oder Befestigungsbereichen auf eine übliche Form reduziert werden, die also außen glatt ist. Der Drall bleibt erhalten, wenn die schraubenförmigen Bereiche nur in bestimmten Gebieten wegfallen.

Zusammengefasst wird die Festigkeit der entstehenden medienführenden Leitungen gleich durch folgende sich auch gegenseitig verstärkende Faktoren um ein Mehrfaches erhöht, natürlich insbesondere bei der bevorzugten Ausführform:
A) Es bilden sich außen Verstärkungsringe in radialer Richtung, so dass das Flächenträgheitsmoment verstärkt wird.
B) Die Ausrichtung der Glasfasern in radialer Schraub- bzw. Drallrichtung verstärkt materialmäßig die Festigkeit.
C) Die zusätzliche Vermischung der Glasfaserbestandteile miteinander durch den Drall führt zu einer verbesserten Homogenisierung der Glasfaseranteile in der Kunststoffschmelze.
D) Durch den Drall und die Rippen wird der Fließwiderstand der Kunststoffschmelze innerhalb der Form erhöht, wodurch eine bessere Oberflächenabbildung hervorgerufen wird.
E) Durch den Drall wird außerdem die Wandstärkenverteilung gleichmäßiger, da alle Kunststoffpartikel mehr Zeit zur Ausbildung einer Form bekommen.

Im folgenden wird anhand der Zeichnung ein Ausführungsbeispiel der Erfindung im Einzelnen beschrieben.

Es zeigen:
- **Figur 1**: Eine perspektivische Darstellung einer medienführenden erfindungsgemäßen Leitung;
- **Figur 2**: einen Schnitt durch eine Ausführungsform ähnlich Figur 1;
- **Figur 3**: einen Schnitt ähnlich Figur 2 durch eine alternative Ausführungsform.

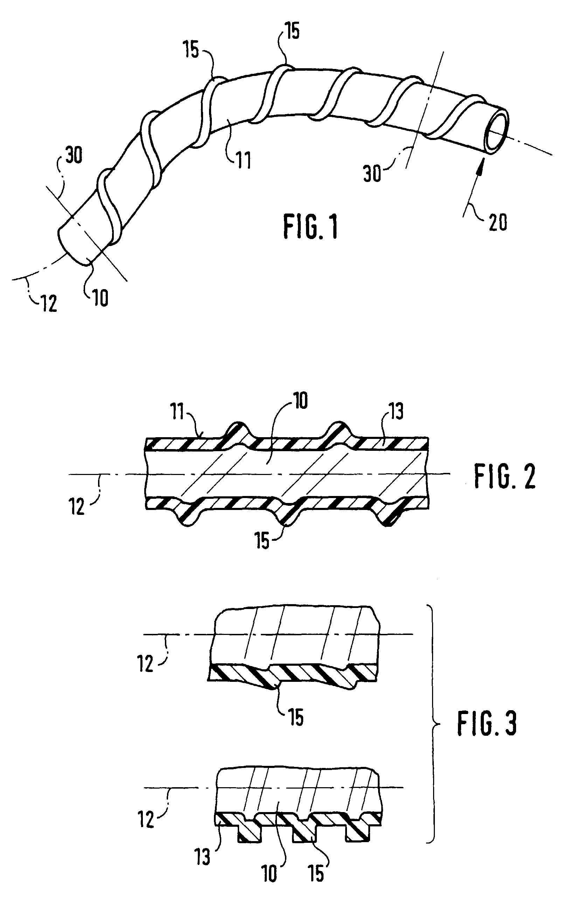

Figur 1 zeigt eine medienführende Leitung 10 in perspektivischer Darstellung mit einigen leichten Biegungen. Im Wesentlichen ist der Durchmesser der Leitung konstant, die Außenseite 11 der Leitung 10 also relativ gleichmäßig und zylindrisch rund bzw. rohrförmig.

Die längliche Leitung 10 besitzt eine Mittelachse 12. Dieser Bereich der Leitung dient im fertigen Zustand zum Führen des Mediums und ist dementsprechend hohl. Die Wandungsdicke der Wandung 13 der Leitung ist im Verhältnis zum Innendurchmesser des entstehenden Hohlraums um die Mittelachse 12 herum beliebig einstellbar durch die Randbedingungen des Gasinnendruckverfahrens.

Außen auf der Außenseite 11 ist eine schraubenförmig das Rohr umgebende Erweiterung 15 vorgesehen.

Die Erweiterung 15 besitzt im Verhältnis zur Dicke der Wandung 13 relativ kleine Abmessungen, die in den Figuren überproportional dargestellt sind. Auch hier ist die Größe der Erweiterungen 15 aber einstellbar und kann durchaus beträchtlich werden, wenn dies zur Erreichung eines bestimmten Dralls sinnvoll erscheint.

Die Leitung ist in den Figuren 2 und 3 in zwei verschiedenen Ausführungsformen im Schnitt dargestellt. Dabei ist zu berücksichtigen, dass hier keine maßstabsgerechte Darstellung gewählt ist. Die Figuren 2 und 3 zeigen, dass die Erweiterungen 15 im Querschnitt sehr unterschiedlich gewählt sein können. Zu erkennen ist auch, dass sich auch im inneren Hohlraum um die Mittelachse 12 herum, also auf der Innenseite der Wandung 13, die Erweiterungen 15, wenn auch in abgeschwächter Form abbilden. Sollten diese abgeschwächten Abbildungen der Erweiterungen 15 nicht erwünscht sein, beispielsweise aufgrund der Art des zu fördernden Mediums, so kann durch entsprechend gewählte Verhältnisse von Erweiterung 15 zur Dicke der Wandung 13 hier eine beliebig starke Abschwächung erfolgen.

Möglich ist es auch, dass die Wandung 13 aus mehreren Schichten des gleichen aber auch verschiedenen Kunststoffmaterials besteht, dass nacheinander mit dem Gasinnendruckverfahren in die Form für die Leitung eingetragen wird.

Die Form für die Leitung 10 entspricht der in der Figur 1 dargestellten Leitungsaußenseite natürlich in negativer Ausbildung. In diese Form wird in der Anströmrichtung 20 die Kunststoffschmelze eingebracht. Die Kunststoffschmelze beginnt radial in Umfangsrichtung von innen die Formwandung zu benetzen und dabei immer weiter in Figur 1 nach links zu strömen. Die Bewegung ist radialförmig, da durch die ständig nachströmende Kunststoffschmelze allein durch die Verdrängung bereits eine Axialkomponente nach links entsteht. Gegebenenfalls kann dies auch durch eine leicht diagonal gestellte Anströmrichtung gefördert werden.

Die Kunststoffschmelze hält sich dabei natürlich nicht nur in den Erweiterungen 15 auf, das wären entsprechende Ausnehmungen in der Negativform. Nach und auch schon während des Füllens dieser Erweiterungen 15 benetzt sie auch in den übrigen Bereichen ebenfalls radial strömend die Außenseite 11.

Nachdem sich die Form in der gewünschten Form gefüllt hat und die Leitung 10 damit im Wesentlichen hergestellt ist, werden an den mit 30 gekennzeichneten Bereichen die Enden des entstandenen Kunststoffteils abgeschnitten, da hier sich unter Umständen störende Einschließungen gesammelt haben und auf diese Weise auch gleich der Anströmbereich um die Anströrmrichtung herum entfallen kann.

### Bezugszeichenliste

- 10: Leitung
- 11: Außenseite
- 12: Mittelachse
- 13: Wandung
- 15: Erweiterung

- 20: Anströmrichtung

## Patentansprüche

1. Verfahren zur Herstellung von medienführenden Leitungen unter Einsatz des Gasinnendruckverfahrens, bei dem eine Anspritzung mit der Kunststoffschmelze in die Form für die Leitung von einem Angußpunkt benachbart zum Ende der Leitung erfolgt,
**dadurch gekennzeichnet,**
**dass** der Kunststoffschmelze eine Bewegungskomponente in nicht achsparallel zur Leitung verlaufender Richtung erteilt wird.

2. Verfahren nach Anspruch 1,
**dadurch gekennzeichnet,**
**dass** der Kunststoffschmelze eine Bewegungskomponente in radialer bzw. Umfangsrichtung der Leitung erteilt wird.

3. Verfahren nach Anspruch 2,
**dadurch gekennzeichnet,**
**dass** die Anspritzung mit der Kunststoffschmelze in radialer Richtung in die Form für die Leitung erfolgt.

4. Verfahren nach Anspruch 2,
**dadurch gekennzeichnet,**
**dass** der Kunststoffschmelze mittels einer Prallplatte ein Drall bzw. eine Umlenkung erteilt wird.

5. Verfahren nach einem der vorstehenden Ansprüche,
**dadurch gekennzeichnet,**
**dass** die Kunststoffschmelze mit Glasfasern verstärkt ist.

6. Verfahren nach Anspruch 5,
**dadurch gekennzeichnet,**
**dass** der Glasfasergehalt in der Kunststoffschmelze mehr als 20 % beträgt.

7. Verfahren nach einem der vorstehenden Ansprüche,
**dadurch gekennzeichnet,**
**dass** für das Gasinnendruckverfahren die Form mit zusätzlichen nach außen erstreckten schraubenartig die Leitung umgebenden Bereichen versehen ist.

8. Medienführende, aus Kunststoff bestehende und mit dem Gasinnendruckverfahren hergestellte Leitung,
**dadurch gekennzeichnet,**
**dass** sie außen auf der Leitungsaußenseite (11) von schraubenartigen Erweiterungen (15) umgeben ist.

9. Leitung nach Anspruch 8,
**dadurch gekennzeichnet,**
**dass** der Glasfasergehalt in der Wandung (13) der Leitung mehr als 20 % beträgt.
